# EUROPÄISCHE PATENTSCHRIFT

(11) **EP 4 243 976 B1**
(45) Veröffentlichungstag und Bekanntmachung des Hinweises auf die Patenterteilung: **12.06.2024**
(21) Anmeldenummer: 22723995.1
(22) Anmeldetag: 19.04.2022
(51) Int. Cl.: B01J 19/00

(54) **VERFAHREN ZUR HERSTELLUNG VON KOMPLEX-ARRAYS**
PROCESS FOR PRODUCING COMPLEX ARRAYS
PROCÉDÉ DE PRODUCTION DE RÉSEAUX COMPLEXES

(30) Priorität: 19.04.2021 DE 102021109811
(43) Veröffentlichungstag der Anmeldung: 20.09.2023
(73) Patentinhaber: BioCopy GmbH, 79312 Emmendingen (DE)
(72) Erfinder: KRÄMER, Stefan Daniel, 79189 Bad Krozingen (DE); ROTH, Günter, 79110 Freiburg (DE); WÖHRLE, Johannes, 79106 Freiburg (DE)
(74) Vertreter: Hertin und Partner Rechts- und Patentanwälte PartG mbB
(86) Internationale Anmeldenummer: PCT/EP2022/060239
(87) Internationale Veröffentlichungsnummer: WO 2022/223516

(56) Entgegenhaltungen:
- WO-A1-2010/100265
- WO-A2-2013/063126
- US-A1- 2012 135 890

## Beschreibung

### Stand der Technik

Komplexe können in der Biologie aus unterschiedlichen Bestandteilen bestehen. Es handelt sich dabei meist um Zusammenschlüsse von mindestens zwei Molekülen, die auf nicht-kovalente Weise miteinander interagieren. Dabei weist der Molekülkomplex in der Regel eine veränderte Funktion gegenüber den Einzelmolekülen auf. Typisch sind z.B. Protein - Protein Komplexe oder auch RNA - Protein Komplexe oder DNA - Protein Komplexe. Beispiel sind Ribosome oder auch Nukleosome. MHC/HLA Moleküle bilden beispielsweise mit unterschiedlichen Peptiden Komplexe. Üblicherweise werden 8er bis 11er Peptide eingelagert, wodurch der Komplex stabilisiert wird. Der Komplex wird auf einer Zelle präsentiert und eine Bindung mit einem T-Zell-Rezeptor kann erfolgen.

Die Analyse oder Testung von unterschiedlichen Komplexen kann für sehr viele Fragestellungen relevant sein. Daher sind Mikroarrays von Interesse, die solche Komplexe beinhalten.

Unter Mikroarrays versteht sich eine Ansammlung vieler unterschiedlicher, kleiner Punkte (Spots) mit Molekülen auf einem festen Substrat. Bei der Herstellung von Mikroarrays wird grundsätzlich zwischen 4 verschiedenen Herstellungsarten unterschieden:
1. Gespottete Mikroarrays
   a. Mikroarray Spotter [1]
2. In-situ synthetisierte Mikroarrays
   a. Spot synthesis; Inkjet printing [2]
   b. Photolithography mittels Photomasken [3]
   c. Photolithography mittels Mikrospieglen [4]
3. Synthese mittels DNA Polymerase
   Eine relative neuartige Methode zur Herstellung von DNA Mikroarrays besteht darin, die DNA an der Oberfläche mittels einer Polymerase anhand eines DNA Templates auf zu synthetisieren (WO2009034181A2_stellacci, WO2010100265A1_roth). Hierbei wird eine feste Oberfläche mit so genannten Primern (Synthese Startpunkte für die DNA Polymerase) versehen. Anschließend wird ein Mix bestehend aus den einzelnen Synthesebausteinen, der DNA- Polymerase und dem Template auf eben diese Oberfläche gegeben. Die Synthese verläuft hierbei hochparallel an bis zu mehreren tausend punkten. Der Reaktionsraum jeder dieser Punkte wurde physikalisch voneinander getrennt, um eine unabhängige Synthesereaktion zu gewährleisten. Dies kann eine räumliche Trennung über Mikrokavitäten bis hin zur Limitierung der Diffusion darstellen.
4. Synthese mittels in-vitro Translationsmix
   Ein DNA Mikroarray kann in ein Protein Mikroarray umgeschrieben werden, indem die exprimierbare DNA mithilfe eines zellfreien Expressionsmixes zunächst in RNA und anschließend die RNA in Proteine translatiert werden. Dieses Prinzip wurde bereits in einer Vielzahl unterschiedlichster Anwendungen und Ausführungen gezeigt, die im Kern aber stets auf einer zellfreien Expression von Proteinen bestehen. Lediglich die Technische Umsetzung und das Abfangen der Proteine an der Oberfläche ist unterschiedlich [5, 16]. In jeder beschriebenen Anwendung ist das Ziel das Erstellen eines Protein Mikroarrays mit möglichst reinen, monoklonalen Protein Spots.

Die Grundlegenden Unterschiede der Herstellungsmethoden bestehen darin, dass die Moleküle bei der zuerst genannten Methode 1 im Vorfeld und bei den anderen Methoden während der Herstellung des Mikroarrays produziert werden.

Es gibt auch Ansätze und Methoden deren Zweck es ist, bestehende Mikroarrays zu replizieren. Beispiele hierfür sind:
5. Die Vervielfältigung von DNA Mikroarrays mittels Hybridisierung [6-10]
6. Die Vervielfältigung von DNA Mikroarrays mittels Hybridisierung und Verlängerung mittels DNA Polymerase [11-13]
7. Vervielfältigung mittels eines Master Kavitätenchips und einer anschließenden PCR [14, 15]

Das Ziel aller oben beschriebener Methoden zur Herstellung von Mikroarrays ist die Erstellung möglichst monoklonaler Spots des Zielmoleküls. Das Zielmolekül bildet hierbei keinerlei Interaktionen mehr zu anderen Molekülen. Bei allen bekannten Synthesemethoden ist ein Zusammenspiel verschiedenster Moleküle notwendig, um das Zielmolekül zu synthetisieren (Synthesebausteine, DNA, RNA, Proteine). In den meisten Fällen sind diese Moleküle nicht mehr auf dem final erhaltenen Mikroarray vorhanden. Falls doch, sind diese lediglich als Beiwerk zu beachten und stehen in keiner relevanten Wechselwirkung mehr mit den Zielmolekülen. Das bedeutet, dass diese Methoden sehr gut geeignet sind, um Mikroarrays mit möglichst reinen Zielmolekülen zu erstellen.

In der Natur kommt es allerdings häufig vor, dass bestimmte Moleküle zunächst durch andere aktiviert oder mit anderen Molekülen so genannte Komplexe bilden müssen, um selbst einen aktivierten Zustand zu erreichen. Mikroarrays, welche derart aktivierte Moleküle beinhalten lassen sich mit dem Stand der Technik nicht oder nur über aufwendige Umwege herstellen.

In der Biologie und Industrie werden häufig Pipettierroboter verwendet, um Moleküle in so genannten Reaktionskammern (mikro bis makro) vorzulegen. Klassischerweise werden Mikrotiterplatten mit jeweils 6, 12, 24, 48, 96, 384, 1536 oder 3456 Reaktionskammern (Wells) verwendet. Dies ist vor allem dann notwendig, wenn die Anzahl der zu analysierenden Proben sehr hoch ist. Hier ist es üblich und Stand der Technik, dass Moleküle in derartigen Reaktionskammern auch vermischt werden, um eine Vielzahl an biologischen Testungen zu realisieren, wie z.B. ELISA, Aktivitätstests, Enzymtests und viele mehr. Ebenfalls können auf diese Weise Molekülkomplexe im Hochdurchsatzverfahren generiert und vermessen werden.

Jedoch ist es üblich, die einzelnen Reaktionen getrennt voneinander zu vermessen. Es ist möglich, Komplexe von Molekülen in den Reaktionskammern zu erzeugen und diese anschließend mittels klassischer Mikroarray-Herstellung auf eine Oberfläche zu drucken. Diese Art der Herstellung ist zeitaufwendig und kostspielig. Zudem zeigt sich, dass besonders komplexe Moleküle, wie Rezeptoren oder Enzyme aufgrund des langen Transferprozesses zu Schaden kommen und teilweise oder komplett inaktiv werden oder artifizielles Verhalten zeigen. Generell wird versucht, die höher komplexen Moleküle möglichst spät zuzugeben oder bevorzugt sogar in Lösung über ein fertiges Array zu spülen. Daher gibt es sehr viel mehr Antigen-Arrays (da weniger komplex), als Antikörper-Arrays (da komplexer) um eine Antigen-Antikörper-Interaktion zu vermessen.

Das Dokument US8105845B2 gehört zum Stand der Technik und beschreibt eine Methode zur Herstellung und Vermessung eines Arrays mit Komplexen. Die Methode ist relativ kompliziert und verwendet ein Kanalsystem. Über 6 Kanäle wird eine Oberfläche mit einem Molekül beschichtet. Anschließend wird das Setup um 90 Grad gedreht und über die gleichen Kanäle erfolgt eine zweite Beschichtung, die zur Komplexbildung der Moleküle führt. Anschließend kann ein Analyt durch die Kanäle geschickt werden, um die Interaktion zwischen Analyt und Komplex an der Oberfläche zu vermessen. Mithilfe dieses Setups lassen sich potenziell 36 Molekülkomplexe an der Oberfläche vermessen.

Die Druckschriften US 8211382 B2 und US 9682396 B2 gehören zum Stand der Technik und beschreiben die sog. Flow Printing Methode. In dieser Methode wird ein Druckkopf auf eine Oberfläche gedrückt, um viele kleine, geschlossene mikrofluidische Kanäle zu erzeugen. Über diese Kanäle werden dann Moleküle eingespült, um diese spezifisch mit der Oberfläche in Kontakt zu bringen. Auch bei diesem System stellt die Anzahl der Kanäle im Printkopf eine Beschränkung dar.

Eine im Stand der Technik bekannte Herstellungsmethode für Mikroarrays erfolgt über den simultanen Transfer von Molekülen von einem Kavitätenchip mit vielen kleinen Reaktionskammern auf eine Oberfläche. Ein solches Verfahren wird beispielsweise in der WO 2010100265 A1 offenbart. Hier werden Moleküle in einem Trägersystem vorgelegt (z.B. Kavitätenchip) und in den Reaktionsräumen vervielfältigt. Die gebildeten Moleküle oder Derivate werden dann auf einer Fängeroberfläche abgefangen. Eine Erzeugung von Komplexen ist in diesem Zusammenhang weder beschrieben noch angedacht. Außerdem ist ein wesentlicher Bestandteil der Methode ein Amplifikationsschritt.

Die WO 2013174942 A1 gehört ebenfalls zum Stand der Technik und beschreibt, wie innerhalb eines Trägersystems (z.B. Kavitätenchip), aus einem Template-Molekül ein anderes Molekül hergestellt werden kann, um das Produkt dann auf einer Fängeroberfläche abzufangen. Ziel ist es dabei ein möglichst reines Mikroarray zu erzeugen, welches aus monoklonalen, reinen Spots besteht. Eine spezifische Mischung von zwei Molekülsorten mit dem Ziel der Komplexbildung wurde nicht angedacht.

Auch die WO 2013 045700 A1 gehört zum Stand der Technik und beschreibt, wie aus genau einem Template-Molekül, welches in einer Kavität vorliegt, ein anderes Molekül erzeugt werden kann. Hierzu wird ein Amplifikationsmix eingefüllt. Das erhaltene Produkt wird dann auf einer Fängeroberfläche abgefangen. Durch die Methode soll ein möglichst reines Mikroarray erzeugt werden, welches aus monoklonalen, reinen Spots besteht. In der beschriebenen Methode ist es notwendig, die Moleküle zu amplifizieren und eine spezifische Mischung von Molekülen ist nicht vorgesehen. Es ist daher nicht möglich mit dieser Methode ein Mikroarray aus Molekülkomplexen zu erzeugen.

Die WO 2013186359 A1 gehört zum Stand der Technik und beschreibt ein Verfahren zur Analyse von molekularen Eigenschaften oder Reaktionsbedingungen, wobei zunächst ein Array mit monoklonalen Molekülspots hergestellt wird. Dabei werden Produktmoleküle hergestellt und übertragen. Die Komplexbildung ist in dem vorgesehenen Reaktionsspektrum nicht erfasst.

Auch die DE 102018122546 B3 gehört zum Stand der Technik. Diese Druckschrift beschreibt die Verwendungsmöglichkeiten eines MHC-Komplexarrays, wobei speziell stabilisierte MHCs zum Einsatz kommen. Die Messung erfolgt mittels BLI (Bio-Layer-Interferometrie). Eine Arrayherstellung wird jedoch nicht offenbart.

Im Stand der Technik steht daher bisher keine Methode bereit, mit der auf einfache und kostensparende Weise ein Mikroarray mit Molekülkomplexen herstellen kann.

### Beschreibung Erfindung

Es war daher die Aufgabe der Erfindung ein Verfahren zur Herstellung eines Molekülkomplex-Arrays bereitzustellen, das die Nachteile des Standes der Technik überwindet und so auf einfache, kostengünstige und schnelle Weise in der Lage ist, unterschiedliche Arrays für Analysen bereitzustellen. Die Aufgabe wird gelöst durch die unabhängigen Ansprüche. Besonders vorteilhafte Ausführungsformen finden sich in den abhängigen Ansprüchen.

In einer ersten bevorzugten Ausführungsform betrifft die Erfindung ein Verfahren zur in-situ Herstellung eines Molekülkomplex-Mikroarrays umfassend die folgenden Schritte:
- Bereitstellen einer ersten Oberfläche umfassend mehrere getrennte Wirkbereiche,
- Vorlegen von ersten Molekülen in mehrere Wirkbereiche,
- Hinzufügen eines zweiten Moleküls in jeden Wirkbereich mit vorgelegtem ersten Molekül
- Verschließen der Wirkbereiche mit einer zweiten Oberfläche,
- Komplexbildung zwischen den Molekülen,
- Immobilisieren des gebildeten Komplexes an einer Fängeroberfläche.

Besonders bevorzugt ist das Verfahren zur in-situ Herstellung eines Molekülkomplex-Mikroarrays umfassend die folgenden Schritte:
a) Bereitstellen einer ersten Oberfläche umfassend mehrere getrennte Wirkbereiche,
b) Vorlegen von ersten Molekülen in mehrere Wirkbereiche,
c) Fixieren der vorgelegten Moleküle an der Oberfläche,
d) Hinzufügen eines zweiten Moleküls in jeden Wirkbereich mit vorgelegtem ersten Molekül,
e) Verschließen der Wirkbereiche mit einer zweiten Oberfläche,
f) Komplexbildung zwischen den Molekülen,
g) Immobilisieren des gebildeten Komplexes an einer Fängeroberfläche, bevorzugt der Oberfläche aus e).

In der erfindungsgemäßen Methode können somit gebildete Molekülkomplexe simultan auf die Fängeroberfläche übertragen werden, ohne dass diese einzeln aus Reaktionskammern entnommen (mikrofluidisch oder über ein Trägermedium) und auf die finale Oberfläche übertragen werden müssen. Das stellt eine erhebliche Erleichterung gegenüber den Methoden im Stand der Technik dar und führt zu Zeit- und Kostenersparnissen sowie zu sehr exakten Ergebnissen.

Ein wesentlicher Aspekt der Erfindung liegt somit darin, dass die Moleküle, die den Komplex bilden sollen, oder auf ihre Komplexbildungseigenschaften hin untersucht werden sollen, nicht vorgemischt werden. D.h. es wird kein Komplex auf ein Array gespottet, sondern die Komplexbildung findet erst auf der Oberfläche statt. Dies hat den Vorteil, dass keine Vormischungen erstellt werden müssen, was aufwändig wäre und wobei sowohl relativ viel Material als auch Ressourcen verbraucht werden. Vor allem bei einer Vielzahl von Kombinationsmöglichkeiten, erreichen die Methoden aus dem Stand der Technik schnell ihre Grenzen. Wenn eine große Zahl an unterschiedlichen Komplexen auf einem Array enthalten sein soll, müsste eine hohe Menge an Vormischungen erfolgen, was durch die erfindungsgemäße Methode entfällt. Die erfindungsgemäße Methode ist demgegenüber deutlich schneller und verbraucht weniger Materialien, Ressourcen und Personalzeit.

Bei einem Komplex gehen typischerweise zwei oder mehr Moleküle eine nicht-kovalente Interaktion ein. Es ist dabei im Sinne der Erfindung bevorzugt, dass der entstandene Komplex eine Aufgabe und/oder Funktionen erfüllt, zu dem die einzelnen Moleküle selbst nicht in der Lage gewesen wären.

Dabei können unterschiedliche erste Moleküle auf einer Oberfläche verwendet werden. Wenn nicht nur eine Sorte an ersten Molekülen auf einer Oberfläche eingesetzt wird, können diese entweder in einzelnen Wirkbereichen separiert vorliegen, sodass in jedem Wirkbereich nur eine Sorte von Molekülen vorgelegt wird. Es ist aber auch möglich, dass innerhalb eines Wirkbereiches mehrere Sorten von ersten Molekülen vorgelegt werden. Dabei ist es auch möglich, die unterschiedlichen Sorten an ersten Molekülen nacheinander vorzulegen.

Wenn mehr als eine Sorte erster Moleküle in einem Wirkbereich vorgelagert werden, ist es möglich, dass mehr als eine Sorte von ersten Molekülen in dem gebildeten Komplex zum Einsatz kommen. Es ist bevorzugt, dass die erfindungsgemäße Methode keinen Amplifikationsschritt enthält und/oder dass die ersten Moleküle keiner Derivatisierung unterzogen werden. Daher ist es auch nicht notwendig einen Reaktionsmix bereitzustellen.

Mit der in dem erfindungsgemäßen Verfahren ist es möglich, die Herstellung eines Komplex-Mikroarrays deutlich zu erleichtern und zu beschleunigen.

Es ist dabei bevorzugt, dass die Fängeroberfläche die zweite Oberfläche ist. Dadurch wird es möglich, dass sich die Komplexe bereits während der Komplexbildung anlagern. Das Verfahren eignet sich besonders gut, wenn auf dem gesamten Array das gleiche zweite Molekül zum Einsatz kommt.

Die zweite Oberfläche kann aber auch selbst ein Mikroarray sein, das z.B. die zweiten Moleküle enthält.

Bei den Wirkbereichen handelt es sich bevorzugt um Kavitäten und/oder Spots. Wichtig ist, dass die Wirkbereiche auf der ersten Oberfläche getrennt voneinander vorliegen und die Moleküle sich nicht vermischen können.

Die Oberflächen können aus unterschiedlichen Materialien hergestellt sein, z.B.: Glas oder PDMS.

Bevorzugt hat die erste Oberfläche, die zweite Oberfläche und/oder die Fängeroberfläche folgende Maße: 5 mm - 75 mm × 3 mm - 25 mm, besonders bevorzugt 10 mm - 25 mm × 10 mm - 25 mm, ganz besonders bevorzugt 15 mm × 15 mm.

Die Zahl der Wirkbereiche liegt pro Oberfläche bevorzugt bei 50 - 20.000, besonders bevorzugt 300 - 10.000.

Die Wirkbereiche können völlig unterschiedliche Größen aufweisen. Bevorzugt handelt es sich um runde Bereiche wobei auch andere Formen möglich sind. Der Durchmesser der einzelnen Wirkbereiche liegt bevorzugt bei 50 µm bis 1000 µm, besonders bevorzugt 100 µm bis 700 µm, ganz besonders bevorzugt 15 µm bis 500 µm. Auch der Abstand zwischen den Wirkbereichen kann unterschiedlich groß sein. Bevorzugt sind Abstände zwischen 10 µm und 200 µm, besonders bevorzugt 20 µm bis 100 µm, ganz besonders bevorzugt 50 µm.

Wenn die Wirkbereiche Kavitäten sind, haben diese ein bevorzugtes Volumen von 500 pl bis 100 nl, besonders bevorzugt 350 pl bis 30 nl, ganz besonders bevorzugt 500pl bis 5 nl.

Die Tiefe der Kavitäten beträgt bevorzugt 5 µm bis 100 µm, besonders bevorzugt 10 µm bis 50 µm, ganz besonders bevorzugt 30 µm.

Konkrete Ausführungsformen weisen beispielsweise folgende Maße auf:
- 4.104 (54×76) Wirkbereiche auf einer Fläche von 16 mm × 10 mm mit einem Wirkbereichdurchmesser von 150 µm und einem Abstand von 50 µm zwischen den Wirkbereichen. Wenn es sich um Kavitäten handelt, sind diese 30 µm tief und weisen ein Volumen von 530 pl auf.
- 1.188 (27×44) Wirkbereiche auf einer Fläche von 16 mm × 10 mm mit einem Wirkbereichdurchmesser von 300 µm und einem Abstand von 50 µm zwischen den Wirkbereichen. Wenn es sich um Kavitäten handelt, sind diese 30 µm tief und weisen ein Volumen von 2,12 nl auf.
- oder 476 (28×17) Wirkbereiche auf einer Fläche von 16 mm × 10 mm auf, mit einem Wirkbereichdurchmesser von 500 µm und einem Abstand von 50 µm zwischen den Wirkbereichen. Wenn es sich um Kavitäten handelt, sind diese 30 µm tief und weisen ein Volumen von 5,8 nl auf.

Die Erfindung ist dabei keineswegs auf diese Ausführungsformen begrenzt. Grundsätzlich sind alle möglichen Maße, Zahlen, Formen und Anordnungen von Flächen und Wirkbereichen denkbar. Es ist außerdem möglich auf gängige Chips, wie z.B. solche mit 1188 Kavitäten zurückzugreifen.

Weiterhin ist bevorzugt, dass die vorgelagerten Moleküle in Schritt c) über einen Immobilisierungstag, durch Adsorption, durch ionische Wechselwirkung, durch Van-der-Waals-Kräfte und/oder durch Eintrocknen an die Oberfläche fixiert werden.

Wird ein Immobilisierungstag verwendet, muss dieser nicht zwingend kovalent an die Oberfläche binden. Auch eine Anbindung über z.B. intermolekulare Wechselwirkungen ist ebenfalls möglich.

Daher kann es bevorzugt sein, dass die ersten Moleküle Immobilisierungstags umfassen.

Es ist bevorzugt, dass die Oberflächen mit den Molekülen nach diesem Schritt lange haltbar sind, was ein entscheidenden Vorteil dieses Verfahrens darstellt. Die Haltbarkeit hängt dabei auch von den eingesetzten Molekülen ab. Es ist besonders bevorzugt, dass die so hergestellten Oberflächen beliebig lange gelagert werden können. Zwischen Schritt c) und Schritt d) können daher je nach Molekül auch problemlos mehrere Wochen oder Monate liegen. Am besten werden die Oberflächen trocken und unterhalb von Raumtemperatur, bevorzugt unter 10° C, besonders bevorzugt bei 4° C aufbewahrt.

Es ist häufig der Fall, dass Komplexe aus einem stabilen und einem instabilen Komplexpartner bestehen. Die Erfindung ist daher besonders vorteilhaft, weil es möglich ist, den stabilen Komplexpartner als erstes Molekül (z.B. ein Peptid) vorzulagern und über einen langen Zeitraum so aufzubewahren. Der weniger stabile Komplexpartner wird dann als zweites Molekül (z.B. ein MHC) erst kurz vor einer geplanten Analyse oder Untersuchung hinzugegeben.

Es können auch Komplexe als erste oder zweite Moleküle eingesetzt werden. Diese bilden dann aber mit dem ersten bzw. zweiten Molekül einen neuen Komplex, der dann als Komplex im Sinne der Erfindung auf der Oberfläche abgefangen wird. Es geht also nicht nur darum Komplexe an eine Oberfläche zu binden, sondern gezielt Komplexe entstehen zu lassen und diese dann abzufangen.

Es ist bevorzugt, dass
- die zweiten Moleküle zu den ersten Molekülen hinzugegeben werden oder wobei
- die zweiten Moleküle auf der zweiten Oberfläche vorliegen und ein Kontakt zwischen den Wirkbereichen umfassend die ersten Moleküle und den zweiten Moleküle über eine Flüssigkeitsbrücke hergestellt wird.

Das Hinzufügen der zweiten Moleküle kann auf unterschiedliche Weise erfolgen. Es ist dabei wichtig, dass möglichst keine Luft in den Wirkbereichen zwischen den zwei Oberflächen bleibt, da dadurch das Abfangen der Moleküle auf der Fängeroberfläche erschwert werden kann. Außerdem sollte möglichst keine Kreuzkontamination erfolgen und die Wirkbereiche getrennt gehalten werden. Dies ist in erster Linie dann wichtig, wenn mit unterschiedlichen ersten Molekülen auf einer Oberfläche gearbeitet wird.

Es ist bevorzugt, dass die zweiten Moleküle Immobilisierungstags umfassen. Hierbei sind die gleichen Immobilisierungstags wie bei den ersten Molekülen möglich.

Es ist möglich, dass die zweiten Moleküle in einem großen Tropfen auf die Oberfläche aufgebracht werden. Dieses Vorgehen hat den Vorteil, dass die einzelnen Wirkbereiche nahezu luftfrei befüllt werden können. Je nach Füllstand kann es aber dazu kommen, dass mit Auflegen der zweiten Oberfläche Moleküle herausgespült werden, sodass diese Methode nicht für jede Anwendung geeignet ist bzw. mit besonderer Präzision gearbeitet werden muss.

Eine weitere Methode stellt das Befüllen mit kleinen Tröpfchen dar. Dies kann z.B. über einen Printer erfolgen. Dabei werden die zweiten Moleküle in kleinen Tröpfchen in die Wirkbereiche aufgebracht. Werden Kavitäten als Wirkbereiche verwendet, kann es vorteilhaft sein, das Volumen der Tröpfen größer zu wählen als das Volumen der Kavitäten, um möglichst sämtliche Luftblasen auszuschließen. Durch das Überfüllen der Wirkbereiche kann es jedoch zu Kreuzkontaminationen kommen, da Moleküle in die benachbarten Wirkbereiche eindringen können.

Als besonders bevorzugt hat es sich jedoch erwiesen, kleine Tröpfchen zu verwenden, deren Volumen kleiner ist als das der Wirkbereiche. Die überschüssige Luft kann z.B. nach Auflegen der zweiten Oberfläche entfernt werden, bevorzugt über das Anlegen von Überdruck. Dieses Vorgehen hat den Vorteil, dass keine Luftblasen vorhanden sind und es zu keiner Kreuzkontamination kommt. Mit aktueller Messtechnik lieferte diese Methode daher die besten Ergebnisse.

Liegen die zweiten Molekülen auf einer zweiten Oberfläche vor, können diese entweder in getrennten Wirkbereichen oder flächig vorliegen. Es ist bevorzugt, dass nur eine Sorte an zweiten Molekülen pro Array verwendet wird, insbesondere wenn diese flächig auf der zweiten Oberfläche aufgetragen sind. Wenn die zweite Oberfläche ein Mikroarray oder ein Kavitätenarray ist, können auch unterschiedliche zweite Moleküle zum Einsatz kommen, wobei dann die unterschiedlichen zweiten Moleküle durch Wirkbereiche, bevorzugt Spots oder Kavitäten räumlich getrennt vorliegen.

Die Wirkbereiche auf der ersten Oberfläche werden so mit dem zweiten Molekül in Kontakt gebracht. Dies kann entweder simultan oder Wirkbereich für Wirkbereich geschehen. Nach oder während des Befüllens werden die Wirkbereiche mit einer Fängeroberfläche verschlossen, welche anschließend spezifisch den entstandenen Molekülkomplex abfangen kann.

Die Komplexbildung findet vorteilhafterweise in den verschlossenen Wirkbereichen statt. Es kann sich dabei z.B. um verschlossene Kavitäten handeln. Auch eine Flüssigkeitsbrücke, die sich zwischen den zwei Oberflächen bildet, kann zu verschlossenen Wirkbereichen im Sinne der Erfindung führen.

Es ist bevorzugt, dass die Komplexbildung durch die Auflösung der Fixierung der ersten Moleküle ermöglicht wird. Dies kann je nach Art der Fixierung auf unterschiedliche Weise erfolgen, z.B. durch Abspalten des Immobilisierungstags, Rehydrierung oder durch Auflösen der zwischenmolekularen Wechselwirkungen. Ein Fachmann ist in der Lage eine geeignete Methode zu wählen ohne dabei selbst erfinderisch tätig zu werden. Für die Abspaltung des Immobilisierungstags kommen je nach Tag und Bindung unterschiedliche Methoden in Betracht. So kann die Abspaltung über Licht unterschiedlichster Wellenlänge, z.B. UV-Licht, chemische Spaltung, enzymatische Spaltung, elektrische Felder, Magnetfelder oder auch elektrochemische Spaltung erfolgen.

Es ist weiterhin bevorzugt, dass das Vorlegen der ersten Moleküle in die Wirkbereiche der ersten Oberfläche über eine der folgenden Methoden geschieht:
a. Spotten von Flüssigkeit umfassend die ersten Moleküle,
b. Aufsynthetisieren der ersten Moleküle,
c. Aufbringen von Partikeln umfassend die ersten Moleküle, und/oder
d. in Kontakt bringen der Wirkbereiche der ersten Oberfläche mit einem DNA-Mikroarray, welches Spots von DNA umfasst, wobei die DNA die ersten Moleküle kodiert.

Es ist bevorzugt, dass die ersten Moleküle ausgewählt sind aus der Gruppe umfassend Proteine, Peptide, DNA, RNA, small molecules, Zellen, bevorzugt CRISPR-assoziierte Proteine und deren Mutanten, gRNA, Proteine aus der Klasse der Haupthistokompatibilitätskomplexe und deren Mutanten, Proteine aus der Klasse der Antikörper, T-Lymphozyten, B-Lymphozyten. In diesem Sinne können daher auch Zellen als Moleküle bezeichnet werden. Wenn Zellen als erste Moleküle eingesetzt werden, stellt der Komplexpartner meistens ein Oberflächenprotein oder eine andere molekularen Struktur auf der Oberfläche der Zelle dar, der meist in der Biologie als Rezeptor, Interaktor, Marker oder Complex of Diversity (CD) bezeichnet wird. Auch Lipide, Phospholipide, Zuckerreste oder andere Oberflächenstrukturen können als Komplexpartner dienen. Es ist besonders bevorzugt, dass solche Moleküle als erste Moleküle zum Einsatz kommen, die stabil genug sind, um auf der Oberfläche fixiert und gelagert zu werden. Daher sind Proteine, Peptide, DNA, RNA, small molecules besonders bevorzugte erste Moleküle.

Es ist bevorzugt, dass die zweiten Moleküle ausgewählt sind aus der Gruppe umfassend Proteine, Peptide, DNA, RNA, small molecules, Zellen, bevorzugt CRISPR-assoziierte Proteine und deren Mutanten, gRNA, Proteine aus der Klasse der Haupthistokompatibilitätskomplexe und deren Mutanten, Proteine aus der Klasse der Antikörper, T-Lymphozyten, B-Lymphozyten. In diesem Sinne können daher auch Zellen als Moleküle bezeichnet werden. Wenn Zellen als zweite Moleküle eingesetzt werden, stellt der Komplexpartner meistens ein Oberflächenprotein oder eine andere Struktur auf der Oberfläche der Zelle dar.

Es ist bevorzugt, dass Protein - Protein bzw. Protein - Peptid Komplexe entstehen. Auch bevorzugt sind solche Komplexe, wobei ein Komplexpartner sich auf einer Zelloberfläche befindet. Dies kann z.B. der Fall sein, wenn als erstes oder zweites Molekül eine Zelle eingesetzt wird.

Ein bevorzugter Protein - Peptid Komplex ist z.B. ein MHC - Peptid Komplex. Auch möglich sind Antikörper - Antigen Komplexe.

Auch bevorzugt entstehen RNA - Protein Komplexe. Z.B. können gRNA und Cas9 jeweils als erstes oder zweites Molekül eingesetzt werden. So entsteht ein RNA - Protein Komplex, dessen Funktion es wäre spezifisch DNA zu schneiden und/oder zu binden. Die gRNA sorgt für die Spezifität und Cas9 für die enzymatische Aktivität des Schneidevorgangs.

Weiterhin bevorzugt sind DNA - Protein Komplexe.

Bevorzugt umfasst die Fängeroberfläche Fängermoleküle, ausgewählt aus der Gruppe umfassend Proteine, Peptide, DNA, RNA, small molecules, bevorzugt Silane, Zucker, Protein-Immobilisierungstags.

Dabei ist es möglich, dass die Fängermoleküle ein erstes Molekül, ein zweites Molekül und/oder den gebildeten Komplex spezifisch abfangen. So kann ein gebildeter Komplex z.B. eine Tertiärstruktur aufweisen, die in den einzelnen Molekülen nicht vorkommt und die vom Fängermolekül, beispielsweise einem Antikörper, spezifisch erkannt wird.

In einer weiteren bevorzugten Ausführungsform betrifft die Erfindung ein beschriebenes Verfahren, wobei der Molekülkomplex-Mikroarray analysiert, vermessen und/oder charakterisiert wird. Dabei kann es sich z.B. um eine Interaktionsvermessung handeln oder eine Untersuchung der Komplexfunktionen. Die Analyse der Interkation kann die Komplexbildung selbst betreffen, oder auch eine Output-Interaktion mit einem oder mehreren weiteren Molekülen.

Eine wichtige Anwendung des erfindungsgemäßen Verfahrens stellt das MHC oder HLA Screening dar. Die Präsentation von Peptiden auf der Zelloberfläche durch MHC/HLA-Moleküle ist ein wichtiger Baustein in der Immunantwort gegen Infektionen oder auch Krebszellen. Adaptive Zelltherapien bieten neue effektive Wege für eine direkte und personalisierte Behandlung von Krankheiten. Zum Beispiel können die T-Zellen des Patienten genetisch mit einem spezifischen T-Zell-Rezeptor (TCR) modifiziert werden, der gezielt eine bestimmte Krebs-Erkrankung erkennen und dadurch eine Immunantwort auslösen kann, um den Tumor des Patienten gezielt zu bekämpfen. Eine andere Möglichkeit, das gleiche Ergebnis zu erzielen, besteht darin, dem Patienten ein designtes "TCR-bispezifisches" Molekül zuzuführen, das den Kontakt zwischen einem abnormalen Zelltyp und einer T-Zelle vermittelt. In beiden Therapieansätzen muss sichergestellt werden, dass der verabreichte neue TCR nicht mit gesunden Zellen interagiert und damit eine Autoimmunreaktion auslöst.

Mit der oben beschriebenen Methode ist es möglich ein MHC- bzw. HLA-Assay herzustellen, welches speziell für das Screening tausender verschiedener MHC- oder HLA-Peptid-Kombinationen ausgelegt ist. Diese MHC- oder HLA-Peptid-Kombinationen sind der Schlüssel, um körpereigene Zellen von fremden oder entarteten Zellen zu unterscheiden. Außerdem sind sie die Bindestellen für die TCR-Moleküle. Vor TCR-basierten Therapien müssen die TCRs im Hochdurchsatz gescreent werden, um sicherzustellen, dass diese nur an der speziellen HLA-Peptid-Kombination binden, die auf der Krebszelle vorhanden ist und nicht an jene, die auf gesunden Zellen vorkommen. [17] Durch das Screening kann z.B. die Wirksamkeit und die Spezifität der TCR Kandidaten untersucht werden.

Um ein solches Screening durchzuführen, werden tausende unterschiedlicher Peptide gezielt und separat mit dem gleichen MHC oder HLA-Molekül vermischt. Dabei werden üblicherweise die Peptide als erste Moleküle vorgelagert. Es ist aber auch möglich, dass die MHCs/HLAs die ersten Moleküle darstellen und die Peptide als zweite Moleküle hinzugegeben werden. Hierdurch kommt es zu einer Komplexbildung von MHC/HLA und Peptid. Anschließend werden die gebildeten einzelnen Komplexe auf einer Fängeroberfläche immobilisiert, um ein Mikroarray zu generieren. Danach wird das Mikroarray mit den zu analysierenden TCR Molekülen in Kontakt gebracht. Diese können löslich als Analyt oder auch auf einer Zelle oder Teilen einer Zelle vorliegen. Abschließend können die Interaktionen zwischen dem TCR und den HLA-Peptid Komplexen analysiert werden.

Für die erfindungsgemäße Methode müssen die HLAs oder MHCs nicht speziell stabilisiert werden. Die Screens lassen sich sowohl mit nativen, modifizierten, mutierten oder stabilisierten MHC/HLA Molekülen durchführen. Dies ist unter anderem auch möglich, weil die Erfindung eine raumgetrennte Vorlagerung der stabilen und Langzeit-lagerbaren Komplexpartner erlaubt. Weniger stabile Partner können als zweites Molekül erst unmittelbar vor der Verwendung des Arrays hinzugeben werden, so dass der Gesamtkomplex sich unmittelbar formt ohne Zerfallserscheinungen durch Lagerung aufzuweisen.

Es ist weiterhin bevorzugt, dass der MHC/HLA Screen mit T-Zellen oder Teilen davon statt TCRs durchgeführt wird, wobei diese T-Zellen einen entsprechenden TCR auf ihrer Oberfläche aufweisen.

In einer weiteren Ausführungsform wird die Komplexbildung zunächst verhindert ist, da das erste oder das zweite Molekül in einem Komplex mit einem temporären Molekül vorliegt. Bevorzugt ist dabei ein MHC bereits mit einem temporären Peptid verbunden. Dieses temporäre Peptid ist an die peptidbindende Grube oder Tasche des MHCs gebunden, sodass das MHC kein anderes Peptid aufnehmen kann. Durch ein Signal wird diese Bindung getrennt und das MHC steht zur Komplexbildung mit dem gewünschten Peptid bereit.

Es ist dabei bevorzugt möglich, MHCs zu verwenden, die ein UV-spaltbares Peptid umfassen, welche als Platzhalter fungieren. Dieses Peptid wird dann im erfindungsgemäßen Verfahren ausgetauscht, durch ein gewünschtes Peptid. Hierzu wird eine UV-Lichtquelle verwendet, die den Chip beleuchtet, sobald beide Moleküle (MHC und gewünschtes Peptid) bereitgestellt wurden. Durch das UV-Licht wird der Platzhalter gepalten und die Position wird frei, damit das gewünschte Peptid einen Komplex mit dem MHC bilden kann. In diesem Fall wird die Komplexbildung durch ein zusätzliches Signal, hier das UV Signal, aktiviert. Diese Ausführungsform eignet sich besonders gut für den Einsatz nicht stabilisierter MHCs.

In einer anderen Ausführungsform werden MHCs verwendet, die nicht korrekt gefaltet. Eine Faltung findet erst in Präsenz der Peptide statt, die an die peptidbindende Grube / Tasche binden.

Alle Ausführungsformen der Erfindung sind sowohl für den Einsatz von MHC Klasse I als auch MHC Klasse II geeignet.

Ein weiteres mögliches Anwendungsgebiet der Erfindung stellt z.B. die Forschung im Bereich der Gentherapie dar. Die Cas-Proteine (z.B. Cas9) bieten die Möglichkeit sehr genaue Genom-Editierungen vorzunehmen, welche vor allem im Bereich der Gentherapien eine große Rolle spielen. Im Falle der Cas9 wird das Protein mittels zwei spezifischer RNA Moleküls programmiert (tracrRNA und crRNA). Diese Programmierung verleiht der Cas9 die Spezifität, an einem bestimmten Genlocus zu binden. Hierbei können tracrRNA und crRNA auch fusioniert werden zur so genannten guide- oder gRNA. Der Vorteil ist, dass man die Cas9 mit nur lediglich einem Molekül in Verbindung bringen muss, um ihm die entsprechende Spezifität zu verleihen. Gerade im Bereich der personalisierten Gentherapie kann es notwendig sein, viele Verschiedene gRNA Moleküle zu testen, um deren Spezifität und off-target Aktivität zum entsprechenden Genlokus zu untersuchen. Ziel ist es, die Nebenwirkungen einer Gentherapie für jeden Patienten zu minimieren [18].

Wenn viele verschiedene gRNAs mit entsprechenden Cas Proteinen in Verbindung gebracht werden, spricht man hierbei von gemultiplexten CRISPR Anwendungen. Im Stand der Technik sind bereits sehr breite Anwendungsgebiete beschrieben. Hierbei wird stets zwischen Gen-Editierung und Transkriptionsregulation unterschieden. Bei ersterem wird gerne gezielt geschnitten (entweder Einzel- oder Doppelstrangbrüche) und bei letzterem binden die Cas Proteine an entsprechenden Loci, um einen Effekt auf die Genregulierung auszuüben [18].

Mit der neuen erfindungsgemäßen Methode ist es möglich, einen Mikroarray zu generieren, auf dem viele verschiedene gRNA-Cas-Proteinkomplexe vorhanden sind. Mit einem derartigen Array können zum einen die Bindung an bestimmte DNA-Regionen untersuchen (z.B. für off-target Analysen) werden. Zum anderen können die einzelnen Wirkbereiche auch in Verbindung mit Zellen gebracht werden, um dadurch gezielt und im Hochdurchsatzformat Gene zu verändern oder zu regulieren. Ebenfalls möglich sind Arrays, bei denen eine Vielzahl von Cas-Mutanten mit der gleichen gRNA in Verbindung gebracht werden, um z.B. eine verbesserte Cas Mutante oder ein Protein mit veränderte PAM (Protospacer adjacent Motif) Sequenzerkennung zu erzeugen / zu screenen.

Alle im Stand der Technik bekannten Methoden im CRISPR Bereich beruhen auf all-in Libraries in Tube für Pulldown Ansätze oder in Zellen mit zellbasierten Readouts. CRISPR Mikroarrays sind im Stand der Technik hingegen nicht beschrieben.

Durch die Erfindung wird daher erstmal eine einfache Herstellungsmethode für Mikroarrays der Komplexe hergestellt, die ohne Amplifikationsreaktion auskommt und bei der auch instabilere Komplexpartner zum Einsatz kommen können.

### Figurenbeschreibung

Im Folgenden wir die Erfindung anhand von Figuren und Beispielen erläutern, ohne dabei auf diese beschränkt zu sein.

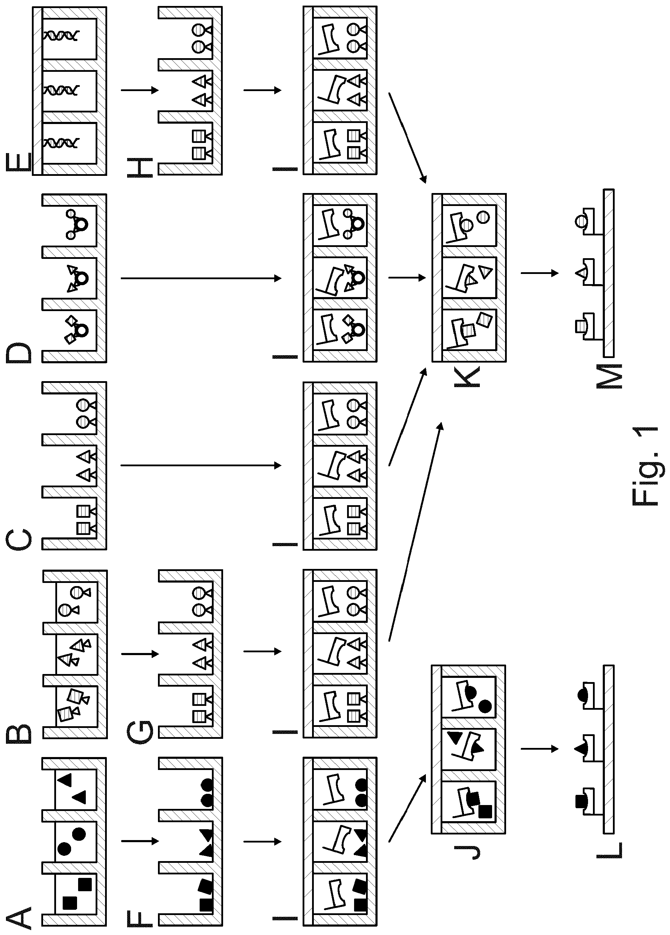

**Figur 1** zeigt eine bevorzugte Ausführungsform der Erfindung. In der gezeigten Abbildung wird eine erste Oberfläche mit getrennten Kavitäten als Wirkbereiche verwendet. In A bis E wird gezeigt, wie die ersten Moleküle vorliegen bzw. eingebracht werden können. Dies kann entweder geschehen durch Spotten von Flüssigkeit welche die reinen Moleküle beinhalten (A), Spotten von Flüssigkeit welche die Moleküle mit einem spezifischen Immobilisierungstag beinhalten (B), Aufsynthetisieren der Moleküle mit einem spezifischen Immobilisierungstag (C), Spotten / Aufbringen von Partikeln (Beads), auf denen die Moleküle mit einem spezifischen
   Immobilisierungstag verankert sind (D) oder durch das Verschließen der Kavitäten mit einem DNA Mikroarray (Gespottet, synthetisiert ...), welches Spots von DNA enthält welche wiederum die ersten Komplexpartner kodieren (E).
   Falls nicht schon der Fall (C und D), werden die ersten Moleküle im nächsten Schritt auf die Oberfläche der Kavitäten gebracht und dort fixiert. Dies kann geschehen durch Eintrocknen der vorhandenen Flüssigkeit (F), durch spezifische Immobilisierung über den Immobilisierungstag und anschließendem Waschen oder Eintrocknen des Chips (G), durch Expression der DNA-Moleküle und anschließender spezifischer Immobilisierung über den Immobilisierungstag und anschließendem Waschen oder eintrocknen des Chips (H).
   In (I) werden die Kavitäten mit dem zweiten Molekül befüllt.
   Die Komplexbildung erfolgt innerhalb der geschlossenen Kavitäten entweder durch Rehydrierung der Moleküle aus Schritt 1 (J) oder durch spezifisches Abspalten der Immobilisierungstags der ersten Moleküle aus Schritt 1 (K).
   Durch Abfangen der Entstandenen Komplexe auf der Fängeroberfläche sowie durch das Waschen der Oberfläche entsteht ein Mikroarray, welches weiter vermessen und charakterisiert werden kann (L + M). Bei der Fängeroberfläche kann es sich um die zweite Oberfläche aus Schritt I handeln oder um eine andere Oberfläche.

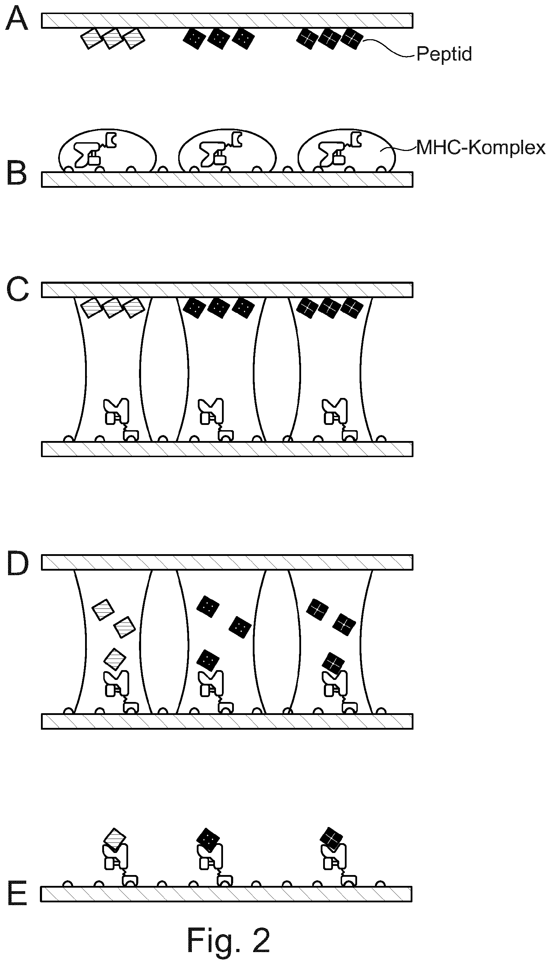

**Figur 2** zeigt eine weitere bevorzugte Ausführungsform des erfindungsgemäßen Verfahrens.
   Ein Array wird mittels Synthese oder Spotting hergestellt mit einer Vielzahl unterschiedlicher erster Moleküle, im vorliegenden Beispiel Peptide (A). Ein weiteres Array wird per Spotting hergestellt mit einer Vielzahl zweiter Moleküle (hier MHC-Komplexe) (B). Anschließend werden beide Arrays in engeren Kontakt gebracht in der Art, dass eine Flüssigkeitsbrücke zwischen den einzelnen Arrays aufgebaut wird. Wichtig ist, dass sich die einzelnen Flüssigkeitsbrücken nicht berühren, sodass die Wirkbereiche getrennt bleiben (C). Die Moleküle des ersten Arrays (A) werden entweder rehydriert oder spezifisch von der Oberfläche abgespalten, z.B. über Licht. Über den Kontakt werden anschließend beide Moleküle der jeweiligen Arrays miteinander vermischt und es kommt zu einer MHC-Peptid-Komplexbildung (D). Die MHC-Peptid-Komplexe können dann abgefangen werden. Das Ergebnis ist ein Mikroarray der MHC-Peptid-Komplexe (E).
**Figur 3**

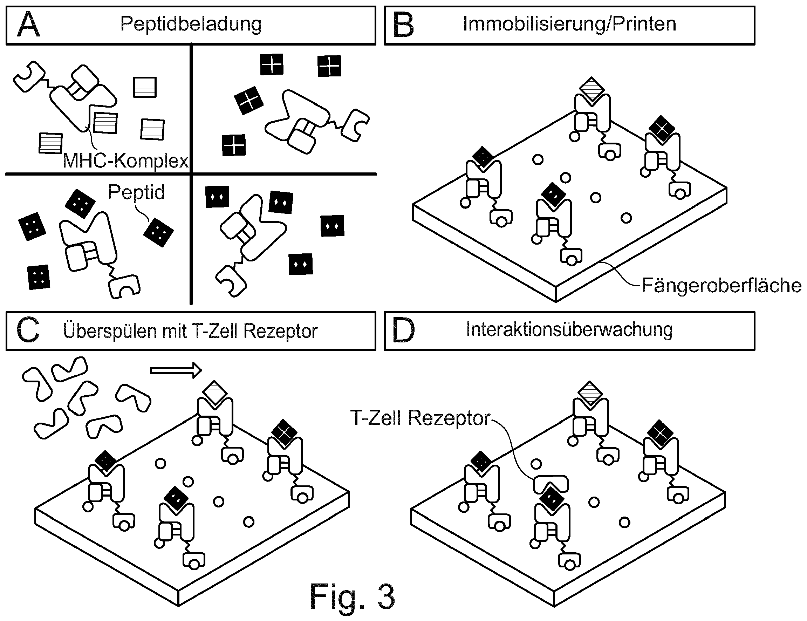

   Abbildung 3 zeigt die Anwendung der erfindungsgemäßen Methode in Kombination mit einem MHC Screening. Um ein solches Screening durchzuführen, werden tausende unterschiedlicher Peptide gezielt und separat mit dem gleichen MHC-Molekül vermischt (A). Hierdurch kommt es zu einer Komplexbildung von MHC und Peptid. Die Abbildung zeigt diesen Vorgang zur besseren Illustration vereinfacht dargestellt nicht in geschlossenen Wirkbereichen. Anschließend werden die einzelnen Komplexe auf einer Oberfläche immobilisiert, um ein Mikroarray zu generieren (B). Danach wird das Mikroarray mit dem zu analysierenden TCR Molekül in Kontakt gebracht (C). Abschließend können die Interaktionen zwischen dem TCR und den MHC-Peptid Komplexen analysiert werden (D).
**Figur 4**

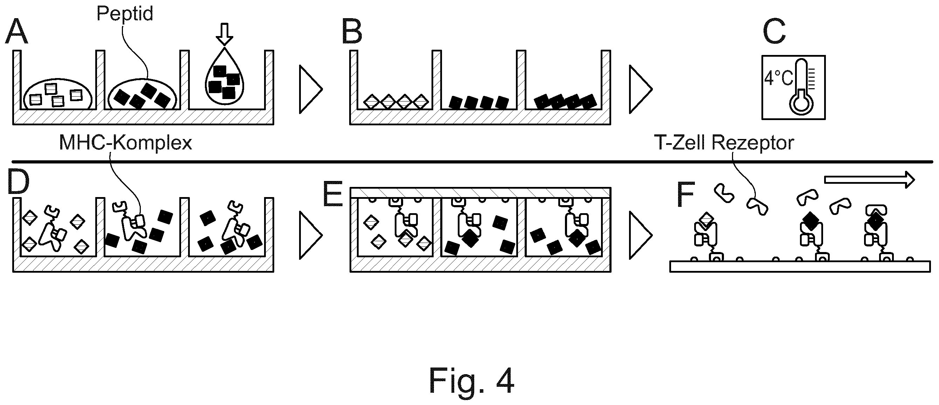

   Abbildung 4 zeigt eine bevorzugte Ausführungsform der erfindungsgemäßen Methode. Dabei werden die ersten Moleküle, hier Peptide auf einen Chip, z.B.: ein PDMS Chip, gespottet (A). In Schritt B ist zu sehen, wie die Peptide durch Eintrocknen fixiert wurden. In diesem Fall ist eine Lagerung bei 4°C über einen langen Zeitraum möglich (C). In Schritt D werden die zweiten Moleküle hinzugefügt, hier MHC-Komplexe. In Schritt E werden die Kavitäten der ersten Oberfläche mit einer Fängeroberfläche verschlossen und es entstehen geschlossene Wirkbereiche in denen sich MHC-Peptid-Komplexe bilden. Diese werden von den Fängermolekülen auf der Fängeroberfläche abgefangen. In Schritt F werden in diesem Fall T-Zell-Rezeptoren hinzugegeben, um die Bindungseigenschaften zu analysieren.
**Figur 5**

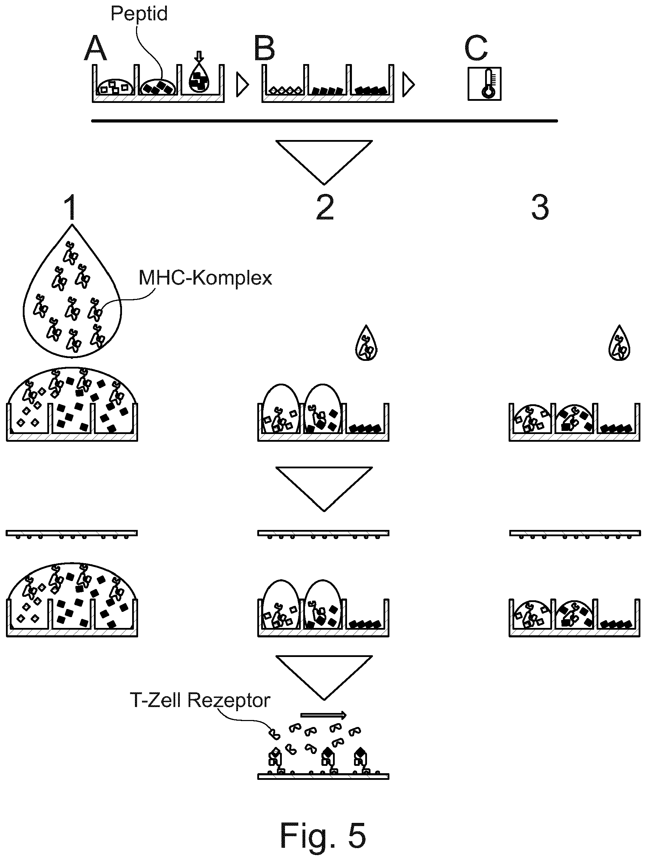

   Abbildung 5 zeigt unterschiedliche Ausführungsformen der erfindungsgemäßen Methode. In Schritt A werden die ersten Moleküle in Wirkbereiche (hier Kavitäten) vorgelagert. Die erfolgt in Form von Tropen. In Schritt B ist die Fixierung zu sehen, die hier durch Eintrocknen erfolgt ist. Die so beladenen Oberflächen sind in diesem Beispiel für lange Zeit bei bevorzugt 4° C lagerbar (C).
   In der zweiten Reihe sind unterschiedliche Möglichkeiten des Auftragens der zweiten Moleküle gezeigt. In diesem Beispiel werden MHCs als zweite Moleküle verwendet. 1 zeigt, dass die zweiten Moleküle mittels großer Tropfen aufgetragen werden können, sodass gleich mehrere Wirkbereiche befüllt werden. Dabei werden die Kavitäten in diesem Beispiel überfüllt, um Lufteinschlüsse zu vermeiden. In 2 werden die MHCs in kleineren Tröpfchen gezielter auf die einzelnen Wirkbereiche aufgebracht. Auch hier werden im Beispiel die Kavitäten überfüllt. In 3 werden die MHCs in kleineren Tröpfchen gezielter auf die einzelnen Wirkbereiche aufgebracht, wobei das Volumen der Tröpfchen hier kleiner ist als das der Kavitäten.
   Die Komplexbildung findet in den Wirkbereichen statt. Anschließend wird in allen drei Beispielen eine Fängeroberfläche aufgelegt. In der letzten Reihe ist zu sehen, wie die Komplexe an der Fängeroberfläche gebunden vorliegen und in diesem Fall auf Ihre Bindungseigenschaften zu T-Zellrezeptoren untersucht werden.
**Figur 6**

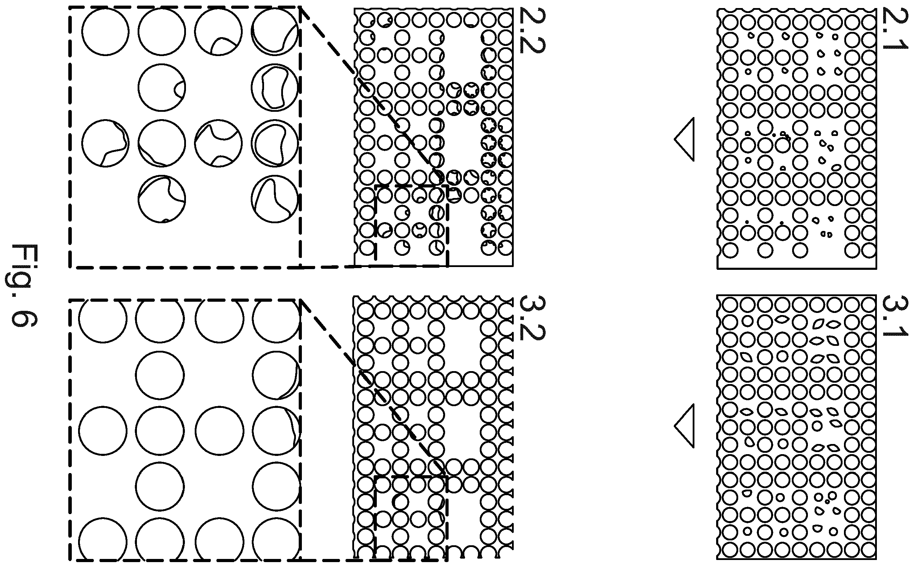

   Abbildung 6 zeigt unterschiedliche Ergebnisse der Methoden nach Figur 5, wobei Abbildung 6.3.2 ein sehr gutes Ergebnis bei korrekter Durchführung der erfindungsgemäßen Methode zeigt. Abbildung 6.2.2 zeigt ebenfalls ein auswertbares Ergebnis, wobei es zu Kreuzkontaminationen mit den benachbarten Kavitäten kam. Trotzdem ist hier bereits eine Interaktion mit den T-Zell-Rezeptoren messbar. In Abbildung 6.3.1 und 6.3.2 wird ein erstrebenswertes Ergebnis bei ordnungsgemäßer Durchführung der erfindungsgemäßen Methode gezeigt. Hier sind saubere Kavitäten zu erkennen, sodass es zu keinen Kreuzkontaminationen kam. Die Interaktion mit den T-Zell-Rezeptoren ist gut messbar.

Es wurden unterschiedliche Versuche mit MHCs als zweites Molekül durchgeführt. Dazu wurden verschiedene MHCs verwendet und Peptid-MHC (pMHC) Komplex Arrays mit dem erfindungsgemäßen Verfahren hergestellt. Die Arrays wurden anschließend mit T-Zell-Rezeptoren überspült und die Bindung zu den pMHCs wurde visualisiert. Die im Folgenden gezeigten Beispiele sollen die Erfindung illustrieren und den Anmeldegegenstand nicht beschränken. Insbesondere sind sowohl MHC Klasse 1 als auch MHC Klasse 2 Moleküle geeignet. Die hier gezeigte Analyse mit löslichen T-Tell-Rezeptor-Analyten ist ein beispielhafter Anwendungsbereich. Es ist ebenso möglich die Arrays mit T-Zellen oder Teilen davon in Kontakt zu bringen und deren Interaktion zu bestimmen. Selbstverständlich sind auch völlig andere Analysen möglich, wobei die Arrays dann mit den jeweiligen anderen Komponenten oder Analysepartnern in Kontakt gebracht werden.

Im Einzelnen:

### Beispiel 1

Es wurden Versuche mit stabilisierten MHCs (Quelle: Tetramershop) durchgeführt, die keine Peptide in der peptidbindenden Tasche umfassen.

Es werden ein mit Streptavidin beschichteter Glasträger und ein Kavitäten-Chip bereitgestellt.

Mit Streptavidin beschichtete Glasträger werden für die Immobilisierung der Biotin getaggten Liganden verwendet.

Die Kavitäten-Chips (BioCopy cavity chip) umfassen kleine Kavitäten, die als Reagenzienbehälter für die pMHC-Komplexbildung benutzt werden.

Die Peptide, die für die pMHC Komplexe verwendet werden, werden in die vorbereiteten Kavitäten-Chips geprintet. Diese können nun bis zur weiteren Verwendung gelagert werden.

Im nächsten Schritt werden die MHC Moleküle in die vorbereiteten Peptid-Chips geprintet. Es folgt eine Bindung des Peptids in der Bindungstasche des MHCs. Die so gebildeten Komplexe werden auf der Streptavidin beschichteten Oberfläche abgefangen und bilden eine Mikroarray-Formation.

Nach einem Inkubationsschritt kann das Glasträger-Chip-Sandwich getrennt werden und der pMHC-Mikroarray steht zur Benutzung bereit.

Die so hergestellten Arrays wurden getestet und dafür mit T-Zell-Rezeptoren gespült. Die Bindung der pMHC Spots wurde visualisiert und lieferte gute Ergebnisse.

### Beispiel 2

Es wurden Versuche mit nicht stabilisierten MHCs (Quelle: Z.B. Sanquin, Biolegend), die UVspaltbare bzw. UV sensitive Peptide umfassen, durchgeführt.

Es werden ein mit Streptavidin beschichteter Glasträger und ein Kavitäten-Chip bereitgestellt.

Mit Streptavidin beschichtete Glasträger werden für die Immobilisierung der Biotin getaggten Liganden verwendet.

Die Kavitäten-Chips (BioCopy cavity chip) umfassen kleine Kavitäten, die als Reagenzienbehälter für die pMHC-Komplexbildung benutzt werden.

Die Peptide, die für die pMHC Komplexe verwendet werden, werden in die vorbereiteten Kavitäten-Chips geprintet. Diese können nun bis zur weiteren Verwendung gelagert werden.

Im nächsten Schritt werden die MHC Moleküle in die vorbereiteten Peptid-Chips geprintet. Für den Austausch eines UV-spaltbaren Peptids, welches im nicht stabilisierten MHC lokalisiert ist, wird eine UV Lichtquelle verwendet und der Chip wird beleuchtet. UV-Spaltung bewirkt den Austausch des gespaltenen Peptids durch das bereitgestellte (geprintete) Peptide.

Nach dem Peptidaustausch werden die so gebildeten Komplexe auf der Streptavidin beschichteten Oberfläche abgefangen und bilden eine Mikroarray-Formation.

Nach einem Inkubationsschritt kann das Glasträger-Chip-Sandwich getrennt werden und der pMHC-Mikroarray steht zur Benutzung bereit.

Der so hergestellt Array wurde mit T-Zell-Rezeptoren gespült und die Bindung an die pMHCs konnte sichtbar gemacht werden und lieferte gute Ergebnisse.

### Beispiel 3

Es wurden Versuche mit nicht stabilisierten HLAs (Quelle: Z.B. Immundex) durchgeführt, die gefaltet werden müssen. Die unbeladenen MHCs sind nicht korrekt gefaltet. Eine Faltung findet in Präsenz der Peptide statt.

Es werden ein mit Streptavidin beschichteter Glasträger und ein Kavitäten-Chip bereitgestellt.

Mit Streptavidin beschichtete Glasträger werden für die Immobilisierung der Biotin getaggten Liganden verwendet.

Die Kavitäten-Chips (BioCopy cavity chip) umfassen kleine Kavitäten, die als Reagenzienbehälter für die pMHC-Komplexbildung benutzt werden.

Die Peptide, die für die pMHC Komplexe verwendet werden, werden in die vorbereiteten Kavitäten-Chips geprintet. Diese können nun bis zur weiteren Verwendung gelagert werden.

Im nächsten Schritt werden die MHC Moleküle in die vorbereiteten Peptid-Chips geprintet. Nun findet die Faltung statt und die Peptide binden in den Taschen der MHC Moleküle und bilden so einen pMHC Komplex.

Die gebildeten Komplexe werden auf der Streptavidin beschichteten Oberfläche abgefangen und bilden eine Mikroarray-Formation.

Nach einem Inkubationsschritt kann das Glasträger-Chip-Sandwich getrennt werden und der pMHC-Mikroarray steht zur Benutzung bereit.

Auch der so hergestellte Array wurde getestet, in dem er mit T-Zell-Rezeptoren gespült wurde. Die gebundenen pMHC Spots konnten visualisiert werden und zeigen gute Ergebnisse.

### Literaturverzeichnis:

[1] Rays, M., Chen, Y., & Su, Y. A. (1996). Use of a cDNA microarray to analyse gene expression patterns in human cancer. Nature genetics, 14.
[2] Blanchard, A. P., Kaiser, R. J., & Hood, L. E. (1996). High-density oligonucleotide arrays. Biosensors and bioelectronics, 11(6-7), 687-690.
[3] Pease, A. C., Solas, D., Sullivan, E. J., Cronin, M. T., Holmes, C. P., & Fodor, S. P. (1994). Light-generated oligonucleotide arrays for rapid DNA sequence analysis. Proceedings of the National Academy of Sciences, 91(11), 5022-5026.
[4] Nuwaysir, E. F., Huang, W., Albert, T. J., Singh, J., Nuwaysir, K., Pitas, A., ... & Green, R. D. (2002). Gene expression analysis using oligonucleotide arrays produced by maskless photolithography. Genome research, 12(11), 1749-1755.
[5] Kilb, N., Burger, J., & Roth, G. (2014). Protein microarray generation by in situ protein expression from template DNA. Engineering in Life Sciences, 14(4), 352-364.
[6] US20060141245A1
[7] WO2006112815A2
[8] Lin, H., Sun, L., & Crooks, R. M. (2005). Replication of a DNA Microarray. Journal of the American Chemical Society, 127(32), 11210-11211.
[9] Kim, J., & Crooks, R. M. (2007). Parallel fabrication of RNA microarrays by mechanical transfer from a DNA master. Analytical chemistry, 79(23), 8994-8999.
[10] Lin, H., Kim, J., Sun, L., & Crooks, R. M. (2006). Replication of DNA microarrays from zip code masters. Journal of the American Chemical Society, 128(10), 3268-3272.
[11] Kim, J., & Crooks, R. M. (2007). Replication of DNA microarrays prepared by in situ oligonucleotide polymerization and mechanical transfer. Analytical chemistry, 79(19), 7267-7274.
[12] US20100256017A1
[13] WO2008022332A2
[14] WC2010100265A1
[15] Krämer, S. D., Wöhrle, J., Meyer, P. A., Urban, G. A., & Roth, G. (2019). How to copy and paste DNA microarrays. Scientific reports, 9(1), 1-10.
[16] Kilb, N., Herz, T., Burger, J., Woehrle, J., Meyer, P. A., & Roth, G. (2019). Protein Microarray Copying: Easy on-Demand Protein Microarray Generation Compatible with Fluorescence and Label-Free Real-Time Analysis. ChemBioChem, 20(12), 1554-1562.
[17] Moritz, A., Anjanappa, R., Wagner, C., Bunk, S., Hofmann, M., Pszolla, G., ... & Maurer, D. (2019). High-throughput peptide-MHC complex generation and kinetic screenings of TCRs with peptide-receptive HLA-A* 02: 01 molecules. Science immunology, 4(37).
[18] McCarty, N. S., Graham, A. E., Studená, L., & Ledesma-Amaro, R. (2020). Multiplexed CRISPR technologies for gene editing and transcriptional regulation. Nature communications, 11(1), 1-13.

## Patentansprüche

1. Verfahren zur in-situ Herstellung eines Molekülkomplex-Mikroarrays umfassend die folgenden Schritte:
a) Bereitstellen einer ersten Oberfläche umfassend mehrere getrennte Wirkbereiche,
b) Vorlegen von ersten Molekülen in mehrere Wirkbereiche,
c) Fixieren der vorgelegten Moleküle an der Oberfläche,
d) Hinzufügen eines zweiten Moleküls in jeden Wirkbereich mit vorgelegtem ersten Molekül,
e) Verschließen der Wirkbereiche mit einer zweiten Oberfläche,
f) Komplexbildung zwischen den Molekülen,
g) Immobilisieren des gebildeten Komplexes an einer Fängeroberfläche.

2. Verfahren nach Anspruch 1, wobei die Fängeroberfläche die zweite Oberfläche ist.

3. Verfahren nach Anspruch 1 oder 2, wobei die Wirkbereiche Kavitäten und/oder Spots sind.

4. Verfahren nach mindestens einem der vorhergehenden Ansprüche, wobei die vorgelagerten Moleküle in Schritt c) über einen Immobilisierungstag, durch Adsorption, durch ionische Wechselwirkung, durch Van-der-Waals-Kräfte, durch eine spezifische chemische Reaktion und/oder durch Eintrocknen an die Oberfläche fixiert werden.

5. Verfahren nach mindestens einem der vorhergehenden Ansprüche, wobei
• die zweiten Moleküle zu den ersten Molekülen hinzugegeben werden oder wobei
• die zweiten Moleküle auf der zweiten Oberfläche vorliegen und ein Kontakt zwischen den Wirkbereichen umfassend die ersten Moleküle und den zweiten Moleküle über eine Flüssigkeitsbrücke hergestellt wird.

6. Verfahren nach mindestens einem der vorhergehenden Ansprüche, wobei die Komplexbildung durch die Auflösung der Fixierung ersten Moleküle ermöglicht wird.

7. Verfahren nach mindestens einem der vorhergehenden Ansprüche, wobei die Komplexbildung zunächst verhindert ist, weil das erste oder das zweite Molekül in einem Komplex mit einem temporären Molekül vorliegt.

8. Verfahren nach mindestens einem der vorhergehenden Ansprüche, wobei die Komplexbildung durch ein Signal, bevorzugt ein UV-Lichtsignal, aktiviert wird.

9. Verfahren nach Anspruch 8, wobei durch das Signal die Komplexbildung mit dem temporären Molekül getrennt wird.

10. Verfahren nach mindestens einem der vorhergehenden Ansprüche, wobei das Vorlegen der ersten Moleküle in die Wirkbereiche der ersten Oberfläche über eine der folgenden Methoden geschieht:
a. Spotten von Flüssigkeit umfassend die ersten Moleküle,
b. Aufsynthetisieren der ersten Moleküle,
c. Aufbringen von Partikeln umfassend die ersten Moleküle, und/oder
d. in Kontakt bringen der Wirkbereiche der ersten Oberfläche mit einem DNA-Mikroarray, welches Spots von DNA umfasst, wobei die DNA die ersten Moleküle kodiert.

11. Verfahren nach mindestens einem der vorhergehenden Ansprüche, wobei die ersten und/oder die zweiten Moleküle Immobilisierungstags beinhalten.

12. Verfahren nach mindestens einem der vorhergehenden Ansprüche, wobei die ersten und/oder die zweiten Moleküle ausgewählt sind aus der Gruppe umfassend Proteine, Peptide, DNA, RNA, small molecules, Zellen, bevorzugt CRISPR-assoziierte Proteine und deren Mutanten, gRNA, Proteine aus der Klasse der Haupthistokompatibilitätskomplexe und deren Mutanten, Proteine aus der Klasse der Antikörper, T-Lymphozyten, B-Lymphozyten.

13. Verfahren nach mindestens einem der vorhergehenden Ansprüche, wobei die Fängeroberfläche Fängermoleküle umfasst, ausgewählt aus der Gruppe umfassend
Proteine, Peptide, DNA, RNA, small molecules, bevorzugt Silane, Zucker, Protein-Immobilisierungstags.

14. Verfahren nach mindestens einem der vorhergehenden Ansprüche, wobei der Molekülkomplex-Mikroarray analysiert, vermessen und/oder charakterisiert wird.

15. Verfahren nach Anspruch 14, wobei der Molekülkomplex-Mikroarray mit T-Zell-Rezeptoren, T-Zellen oder Teilen davon in Kontakt gebracht wird und die Interaktion zwischen den Molekülkomplexen und den T-Zell-Rezeptoren, T-Zellen oder Teilen davon analysiert wird.

## Claims

1. A method for the in-situ production of a molecular complex microarray comprising the following steps:
a) Providing a first surface comprising a plurality of separate active regions,
b) Introduction of first molecules into a plurality of active regions,
c) Fixing the presented molecules onto the surface,
d) Adding a second molecule to each active region with the first molecule present,
e) Closing the active regions with a second surface,
f) Complexation between the molecules,
g) Immobilization of the formed complex on a capture surface.

2. Method according to claim 1, wherein the capture surface is the second surface.

3. Method according to claim 1 or 2, wherein the active regions are cavities and/or spots.

4. Process according to at least one of the preceding claims, wherein the introduced first molecules are fixed to the surface in step c) via an immobilization tag, by adsorption, by ionic interaction, by van der Waals forces, by a specific chemical reaction and/or by drying.

5. Method according to at least one of the preceding claims, wherein
• the second molecules are added to the first molecules or wherein
• the second molecules are present on the second surface and contact is established between the active regions comprising the first molecules and the second molecules via a liquid bridge.

6. Method according to at least one of the preceding claims, wherein the complexation is enabled by unfixing the first molecules.

7. Method according to at least one of the preceding claims, wherein complexation is initially prevented because the first or the second molecule is in a complex with a temporary molecule.

8. Method according to at least one of the preceding claims, wherein the complexation is activated by a signal, preferably a UV light signal.

9. Method according to claim 8, wherein the signal separates the complexation with the temporary molecule.

10. Method according to at least one of the preceding claims, wherein the introduction of the first molecules into the active regions of the first surface is effected by one of the following methods:
a. spotting liquid comprising the first molecules,
b. synthesizing the first molecules,
c. applying particles comprising the first molecules, and/or
d. establishing contact between the active regions of the first surface and a DNA microarray comprising spots of DNA, wherein the DNA encodes the first molecules.

11. Method according to at least one of the preceding claims, wherein the first and/or the second molecules comprise immobilization tags.

12. Method according to at least one of the preceding claims, wherein the first and/or the second molecules are selected from the group comprising proteins, peptides, DNA, RNA, small molecules, cells, preferably CRISPR-associated proteins and mutations thereof, gRNA, proteins from the class of major histocompatibility complexes and mutations thereof, proteins from the class of antibodies, T-lymphocytes, B-lymphocytes.

13. Method according to at least one of the preceding claims, wherein the capture surface comprises capture molecules selected from the group comprising
proteins, peptides, DNA, RNA, small molecules, preferably silanes, sugars, protein immobilization tags.

14. Method according to at least one of the preceding claims, wherein the molecular complex microarray is analyzed, measured and/or characterized.

15. Method according to claim 14, wherein the molecular complex microarray is brought into contact with T cell receptors, T cells or parts thereof and the interaction between the molecular complexes and the T cell receptors, T cells or parts thereof is analyzed.

## Revendications

1. Procédé de production in situ d'un microréseau de complexe moléculaire comprenant les étapes suivantes :
a) la fourniture d'une première surface comprenant plusieurs zones actives distinctes,
b) la présentation de premières molécules dans plusieurs zones actives,
c) la fixation des molécules présentées sur la surface,
d) l'ajout d'une seconde molécule à chaque zone active ayant la première molécule présentée,
e) la fermeture des zones actives avec une seconde surface,
f) la formation de complexe entre les molécules,
g) l'immobilisation du complexe formé sur une surface de capture.

2. Procédé selon la revendication 1, dans lequel la surface de capture est la seconde surface.

3. Procédé selon la revendication 1 ou 2, dans lequel les zones actives sont des cavités et/ou des taches.

4. Procédé selon au moins l'une des revendications précédentes, dans lequel les molécules situées en amont de l'étape c) sont fixées sur la surface par un marqueur d'immobilisation, par adsorption, par interaction ionique, par forces de Van der Waals, par une réaction chimique spécifique et/ou par séchage.

5. Procédé selon au moins l'une des revendications précédentes, dans lequel
• les secondes molécules sont ajoutées aux premières molécules ou dans lequel
• les secondes molécules sont présentes sur la seconde surface et le contact entre les zones actives comprenant les premières molécules et les secondes molécules est établi par l'intermédiaire d'un pont liquide.

6. Procédé selon au moins l'une des revendications précédentes, dans lequel la formation du complexe est rendue possible par la dissolution de la fixation des premières molécules.

7. Procédé selon au moins l'une des revendications précédentes, dans lequel la formation du complexe est initialement empêchée parce que la première ou la seconde molécule est présente dans un complexe avec une molécule temporaire.

8. Procédé selon au moins l'une des revendications précédentes, dans lequel la formation du complexe est activée par un signal, de préférence un signal lumineux UV.

9. Procédé selon la revendication 8, dans lequel le signal sépare la formation du complexe avec la molécule temporaire.

10. Procédé selon au moins l'une des revendications précédentes, dans lequel l'introduction des premières molécules dans les zones actives de la première surface s'effectue par l'une des méthodes suivantes :
a. dépôt de liquide en taches comprenant les premières molécules,
b. synthétisation des premières molécules,
c. application de particules comprenant les premières molécules, et/ou
d. mise en contact des zones actives de la première surface avec un microréseau à ADN qui comprend des taches d'ADN, l'ADN codant pour les premières molécules.

11. Procédé selon au moins l'une des revendications précédentes, dans lequel les premières et/ou les secondes molécules comprennent des marqueurs d'immobilisation.

12. Procédé selon au moins l'une des revendications précédentes, dans lequel les premières et/ou les secondes molécules sont choisies dans le groupe comprenant les protéines, les peptides, l'ADN, l'ARN, les petites molécules, les cellules, de préférence les protéines associées à CRISPR et leurs mutants, les ARNg, les protéines de la classe des complexes majeurs d'histocompatibilité et leurs mutants, les protéines de la classe des anticorps, les lymphocytes T, les lymphocytes B.

13. Procédé selon au moins l'une des revendications précédentes, dans lequel la surface de capture comprend des molécules de capture sélectionnées dans le groupe comprenant les protéines, les peptides, l'ADN, l'ARN, les petites molécules, de préférence les silanes, les sucres, les marqueurs d'immobilisation des protéines.

14. Procédé selon au moins l'une des revendications précédentes, dans lequel le microréseau de complexe moléculaire est analysé, mesuré et/ou caractérisé.

15. Procédé selon la revendication 14, dans lequel le microréseau de complexe moléculaire est mis en contact avec des récepteurs de lymphocytes T, des lymphocytes T ou des parties de ceux-ci et l'interaction entre les complexes moléculaires et les récepteurs de lymphocytes T, les lymphocytes T ou des parties de ceux-ci est analysée.
